# EUROPÄISCHE PATENTANMELDUNG

(11) **EP 2 922 153 A1**
(43) Veröffentlichungstag der Anmeldung: **23.09.2015**
(21) Anmeldenummer: 15000824.1
(22) Anmeldetag: 20.03.2015
(51) Int. Cl.: H01R 13/62, H01R 13/64, H01R 31/06, H05K 5/02, G06K 19/077, H01R 13/24

(54) **Magnetische Verbindungsanordnung**

(30) Priorität: 21.03.2014 DE 102014004501
(71) Anmelder: SIMTECH Electronicservice Simanowski GmbH, 88662 Überlingen (DE)
(72) Erfinder: Simanowski, Hans-Georg, 88662 Überlingen (DE)
(74) Vertreter: Börjes-Pestalozza, Henrich

(57) **Zusammenfassung**

Die Erfindung betrifft eine magnetische Verbindungsanordnung aus einem Kupplungselement und einem Gegenkupplüngselement, wobei das Kupplungselement und das Gegenkupplungselement durch Magnetkraft reversibel verbunden sind und das Kupplungselement und das Gegenkupplungselement ein jeweils mehrere Kontaktbereiche umfassendes Kontaktfeld aufweisen, über welche sich die beiden Elemente kontaktieren. Die Verbindungsanordnung dient zum Verbinden von zumindest einer Datenleitung und zumindest einer Elektrizitätsleitung, wobei die Ausrichtung des Kupplungselements und des Gegenkupplungselements zueinander durch magnetische Polung festgelegt ist.

## Beschreibung

Die Erfindung betrifft eine magnetische Verbindungsanordnung aus einem Kupplungselement und einem Gegenkupplungselement, wobei das Kupplungselement und das Gegenkupplungselement durch Magnetkraft reversibel verbunden sind, wobei das Kupplungselement und das Gegenkupplungselement ein jeweils mehrere Kontaktbereiche umfassendes Kontaktfeld aufweisen und sich das Kupplungselement und das Gegenkupplungselement über die Kontaktbereiche der Kontaktfelder kontaktieren.

Verbindungsanordnungen der eingangs erwähnten Art sind im Stand der Technik bereits mehrfach beschieben. Allerdings ist keine der vorbekannten Verbindungsanordnungen für einen Einsatz insbesondere im militärischen oder dem Outdoor Bereich einsetzbar. Hier besteht insbesondere die Gefahr, dass die Verbindungsanordnung durch unsachgemäße Verwendung, Umwelteinflüsse, Schmutz oder Feuchtigkeit beschädigt wird und dass dadurch keine Datenleitung und/oder elektrische Leitung unter Verwendung der Verbindungsanordnung mehr möglich ist. Insbesondere Verbindungsanordnungen, welche ein Steckteil und ein Buchsenteil umfassen, haben den Nachteil, dass sie insbesondere durch Verschmutzungen und/oder Feuchtigkeit leicht beschädigt werden können. Ein Beispiel dafür ist unter anderem eine Verbindung aus USB-Stecker und USB-Buchse (USB = Universal Serial Bus). Zudem besteht insbesondere auch für solche Verbindungsanordnungen der Nachteil, dass die Stecker bei roher Gewalteinwirkung leicht beschädigt werden, beispielsweise brechen können. Die Buchsen sind insbesondere ungeeignet, da sich darin Schmutz, Feuchtigkeit und/oder Staub ansammeln kann. Dadurch können die Kontaktelemente der Buchse nicht mehr durch die Gegenkontakte des Steckers kontaktiert werden oder durch das Eindringen von feinen Fremdkörpern in die Buchse wird ein Einstecken des Steckers sogar gänzlich verhindert. Ein weiterer Nachteil üblicher Verbindungsanordnungen ist die geringe mechanische Stabilität und der dadurch schnell einsetzende und die Funktionalität beeinträchtigende Verschleiß der Verbindungsanordnungselemente bei häufiger und/oder unsachgemäßer Verwendung. Dabei können bereits wenige unsachgemäße Handlungen oder der Einsatz roher Gewalt dazu führen, dass die Verbindungsanordnung beschädigt wird und nicht mehr funktionsfähig ist. Zudem ist es bei der Verwendung von Steckteilen möglich, dass der Stecker insbesondere unter Einsatz roher Gewalt unsachgemäß in die Buchse geschoben werden kann, wodurch jedoch keine elektrische Verbindung und/oder Datenübertragungsleitung hergestellt werden kann. Eine Beschädigung der Verbindungsanordnung kann im Falle eines Speichermediums, wie zum Beispiel eines USB-Massenspeichers, dazu führen, dass ein kompletter Verlust der auf dem Speichermedium gespeicherten Daten entsteht. Ein kompletter Verzicht auf physikalische Schnittstellen ist allerdings in vielen Anwendungsbereichen nicht machbar oder nur schwierig umsetzbar, beispielsweise aufgrund einer nötigen hohen Datensicherheit. Deshalb besteht gerade in den oben genannten Bereichen der Bedarf, insbesondere robuste, schmutzresistente und wasserfeste Speichermedien bereitzustellen, welche mit einer möglichst universell verwendeten und daher mit vielen Endgeräten kompatiblen Verbindungstechnik ausgestattet sind, um sie mit einer Vielzahl von Endgeräten nutzen zu können. Die Verwendung gängiger Verbindungstechniken wie beispielsweise USB-Stecker und USB-Buchse haben den Vorteil, dass sehr viele Geräte bereits standardmäßig damit ausgestattet sind. Die Einführung einer komplett neuen Verbindungstechnik hätte demnach den Nachteil, dass sie mit einer großen Anzahl bestehender Geräte inkompatibel wäre oder die Geräte teuer nachgerüstet werden müssten. Zudem sollte die Verbindungstechnik eine schnelle, unkomplizierte und reversible Verbindung mit dem Endgerät erlauben.

Es besteht daher die Aufgabe, eine magnetische Verbindungsanordnung zu schaffen, deren Funktionalität durch das Einwirken von roher Gewalt, Schmutz und Feuchtigkeit insbesondere bei Einsatz im Sicherheits-, Industrie- oder Outdoorbereich nicht beeinträchtigt wird, welche auf bereits vorbekannten Verbindungstechniken basiert, um ein teures Umrüsten von Geräten, die bereits über eine der gängigen Verbindungstechniken verfügen, zu verhindern und um eine reversible Verbindung zur Übertragung von Daten und/oder Elektrizität zu ermöglichen.

Die erfindungsgemäße Lösung dieser Aufgabe besteht bei der magnetischen Verbindungsanordnung der eingangs erwähnten Art insbesondere darin, dass die Verbindungsanordnung zum Verbinden von zumindest einer Datenleitung und zumindest einer Elektrizitätsleitung dient, und dass die Ausrichtung des Kupplungselements und des Gegenkupplungselements zueinander durch magnetische Polung festgelegt ist.

Das Kupplungselement der erfindungsgemäßen magnetischen Verbindungsanordnung umfasst vorzugsweise zumindest ein Speichermedium. Das Speichermedium ist insbesondere in Form einer Leiterplatte in das Kupplungselement integriert und wird durch eine Ummantelung geschützt. Das Speichermedium umfasst vorzugsweise eine Schnittstelle, einen Schwingquarz, optional einen Controller und einen Speicherchip. Geeignete Speichermedien sind ein USB-Massenspeicher, ein Flash-Speicher oder dergleichen, insbesondere ein Flash-Speicher. Vorzugsweise: handelt es sich bei dem Speichermedium der erfindungsgemäßen magnetischen Verbindungsanordnung um einen Single-Level-Cell Flashspeicher.

Das Gegenkupplungselement der erfindungsgemäßen magnetischen Verbindungsanordnung umfasst zumindest ein Verbindungteil für eine bestimmte Schnittstelle, welches vorzugsweise in eine Buchse, insbesondere in eine USB-Buchse einsteckbar ist und dadurch das Gegenkupplungselement als Anschlussadapter für das Kupplungselement der erfindungsgemäßen magnetischen Verbindungsanordnung fungiert. Durch die reversible, magnetische Kupplung des Kupplungselements und des Gegenkupplungselements ist somit zumindest eine Strom- und/oder Datenverbindung insbesondere mit einem kompatiblen Gerät (z.B. Drucker) oder Computer herstellbar. Es ist insbesondere zweckmäßig, dass das Speichermedium umfassende Kupplungselement der erfindungsgemäßen magnetischen Verbindungsanordnung über das an die USB-Buchse eingesteckte Gegenkupplungselement mit Strom versorgt wird.

In weiteren bestimmten Ausgestaltungsformen umfasst das Gegenkupplungselement der erfindungsgemäßen magnetischen Verbindungsanordnung ein Verbindungsteil, wodurch eine Verbindung zu einer FireWire-Schnittstelle oder Thunderbolt-Schnittstelle herstellbar ist.

Um durch die erfindungsgemäße magnetische Verbindungsanordnung eine lagegerechte sowie stabile, aber dennoch reversible Verbindung herstellen zu können umfasst das Kupplungselement der erfindungsgemäßen magnetischen Verbindungsanordnung zumindest zwei unterschiedlich gepolte Permanentmagnete und das Gegenkupplungselement der erfindungsgemäßen magnetischen Verbindungsanordnung zumindest zwei unterschiedlich gepolte Permanentmagnete, wobei das Kupplungselement und das Gegenkupplungselement durch die Magnetkraft der unterschiedlich gepolten Permanentmagnete zusammen gehalten werden und dadurch die Polung der zumindest einen Datenleitung und/oder der zumindest einen Elektrizitätsleitung festgelegt wird, wobei eine nicht lagegerechte Verbindung von Kupplungselement und Gegenkupplungselement zumindest durch die magnetische Abstoßungskraft gleichgepolter Magnete verhindert wird. Dem Verwender wird durch die haptische Wahrnehmung der magnetischen Abstoßungskraft direkt signalisiert, dass er das Kupplungselement unsachgemäß zum Gegenkupplungselement ausgerichtet hat. Vorzugsweise werden Neodym-Magnete als Permanentmagnete verwendet.

Die zumindest eine durch die erfindungsgemäße magnetische Verbindungsanordnung zu verbindendende Datenleitung besteht vorzugsweise aus zumindest einem Datenleitungspaar, wobei zumindest ein Datenleitungspaar dem positiven Datenkanal und zumindest ein Datenleitungspaar dem negativen Datenkanal zugeordnet ist. Die Datenübertragungsrate beträgt dabei mindestens 12 Mbit/s, vorzugsweise mindestens 480 Mbit/s, vorzugsweise mindestens 5 Gbit/s.

Insbesondere beträgt die Datenrate (Burst Rate) eine Geschwindigkeit von bis zu 250 MB/s, die Lesegeschwindigkeit 246 MB/s und die Schreibgeschwindigkeit 221 MB/s.

Die zumindest eine durch die erfindungsgemäße magnetische Verbindungsanordnung zu verbindendende Elektrizitätsleitung besteht vorzugsweise aus zumindest einer Leitung, welche der Masse zugeordnet ist und zumindest einer Versorgungsleitung, an welche eine Versorgungsspannung, vorzugsweise eine Versorgungsspannung von 5 V, angelegt ist.

Die erfindungsgemäße magnetische Verbindungsanordnung hat insbesondere den Vorteil, dass das Kontaktfeld des Gegenkupplungselements mehrere, vorzugsweise zumindest vier insbesondere federbelastete Kontaktelemente, vorzugsweise elf insbesondere federbelastete Kontaktelemente, umfasst wobei vorzugsweise zumindest jeweils ein Kontaktelement dem positiven Datenkanal, dem negativen Datenkanal, der Versorgungsleitung und der Masse zugeordnet ist, und dass diese Kontaktelemente jeweils zumindest einen äquivalent zugeordneten Kontaktbereich des Kontaktfeldes am Kupplungselement kontaktierend beaufschlagen, wodurch eine Daten- und/oder Elektrizitätsverbindung hergestellt ist. Verbindungsbeeinträchtigungen aufgrund des Eindringens von Verschmutzungen oder Feuchtigkeit werden bei der erfindungsgemäßen magnetischen Verbindungsanordnung insbesondere dadurch verhindert oder eingeschränkt, dass die Kontaktelemente des Gegenkupplungselements die flach ausgebildeten, flächenbündig angeordneten Kontaktbereiche des Kupplungselements kontaktierend beaufschlagen. Sollte das Kupplungselement verschmutzt werden, so kann es aufgrund seiner schmutzresistenten und wasserfesten Oberfläche beispielsweise durch Abspülen mit Wasser einfach gereinigt werden. Die Kontaktbereiche, insbesondere die Kontaktelemente des Gegenkupplungselements und/oder die Kontaktbereiche des Kupplungselements bestehen vorzugsweise aus Gold oder einem anderen geeigneten Metall.

Des Weiteren ist es zweckmäßig, wenn das Gegenkupplungselement als Verschluss- und/oder Schutzkappe ausgeformt ist, wodurch insbesondere das Kontaktfeld des Kupplungselements und/oder des Gegenkupplungselements vor Schmutz, Feuchtigkeit, Umwelteinflüssen und Gewalteinwirkung geschützt ist. Das bedeutet, dass dadurch die erfindungsgemäße magnetische Verbindungsanordnung als nach außen geschlossene, von Feuchtigkeit, Schmutz, Umwelteinflüssen und/oder Gewalteinwirkung geschützte Einheit ausgeformt ist.

Es ist besonders zweckmäßig, dass die erfindungsgemäße magnetische Verbindungsanordnung mit einem rutschfesten, wasserundurchlässigen und/oder stoßresistenten Material, vorzugsweise mit Kunststoff und/oder Gummi, ummantelt ist. Dadurch ist die erfindungsgemäße magnetische Verbindungsanordnung beispielsweise bei der Verwendung als Datenträger universeller einsetzbar, zuverlässiger und robuster als vorbekannte Speichermedien. Durch die robuste Ummantelung sind innenliegende Bauteile ausreichend geschützt. Die Auswahl der Materialien, insbesondere eines oder mehrerer Kunststoffe zum Ummanteln der erfindungsgemäßen magnetischen Verbindungsanordnung erlaubt den Einsatz bei Temperaturen von -40°C bis +85°C.

Um ein Mitführen der erfindungsgemäßen magnetischen Verbindungsanordnung zu erleichtern, umfasst diese vorzugsweise am Kupplungselement eine Haltevorrichtung. Es ist zweckmäßig, dass diese Haltevorrichtung als Öse ausgebildet ist, in welche beispielsweise ein Karabinerhaken einführbar ist.

Um die Datensicherheit der auf dem Speichermedium der erfindungsgemäßen magnetischen Verbindungsanordnung zu gewährleisten, kann optional eine Verschlüsselungssoftware verwendet werden, welche die auf dem Speichermedium abgelegten Daten verschlüsselt. Insbesondere wird eine solche Verschlüsselung durch einen Controller ausgeführt.

Die erfindungsgemäße magnetische Verbindungsanordnung eignet sich aufgrund der genannten Vorteile zur Verwendung im Außenbereich (Outdoor-Bereich) oder im Sicherheitsbereich (Polizei, Militär und/oder Sicherheitsdienste), da die Funktionalität der erfindungsgemäßen magnetischen Verbindungsanordnung nicht durch grobe Gewalteinwirkung, Umwelteinflüsse, Schmutz und/oder Feuchtigkeit beeinträchtigt wird. Demnach kann ein Datenverlust bei der Verwendung der erfindungsgemäßen magnetischen Verbindungsanordnung als Speichermedium gegenüber vorbekannten Speichermedien verhindert werden. Weiterhin kann die erfindungsgemäße magnetische Verbindungsanordnung auch in der Industrie verwendet werden.

Weitere Merkmale gemäß der Erfindung ergeben sich aus der nachfolgenden Figurenbeschreibung in Verbindung mit den Ansprüchen. Nachstehend wird die Erfindung anhand eines vorteilhaften Ausführungsbeispiels noch näher beschrieben.

Es zeigt:
- Fig. 1: die längsseitig aufgeschnittene erfindungsgemäße magnetische Verbindungsanordnung in gekuppeltem Zustand,
- Fig. 2: eine perspektivische Ansicht der Längsseite des erfindungsgemäßen magnetischen Verbindungsanordnung in entkuppeltem Zustand, und
- Fig. 3: eine perspektivische Ansicht der Frontseite des Kupplungselements der erfindungsgemäßen magnetischen Verbindungsanordnung.

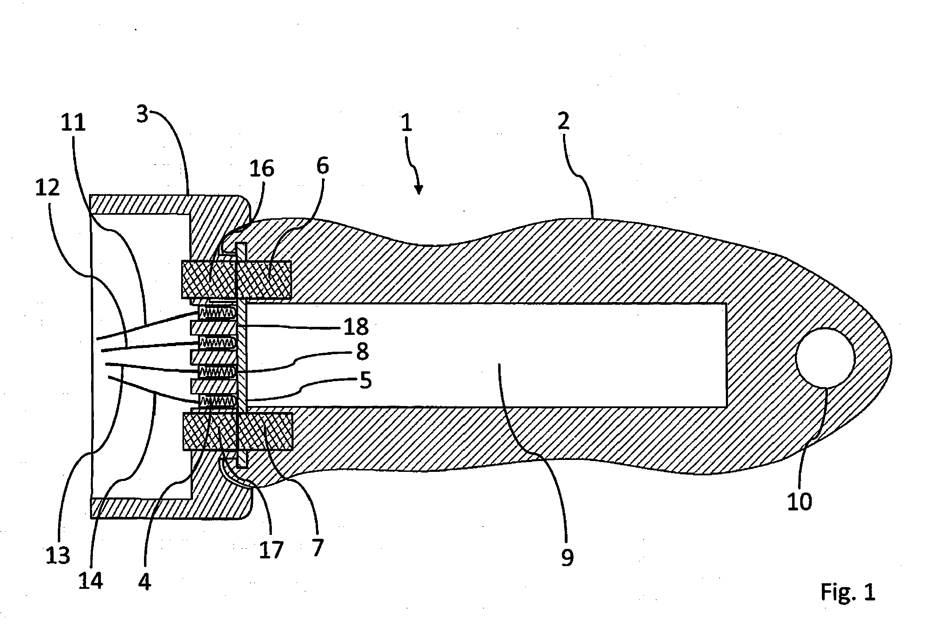

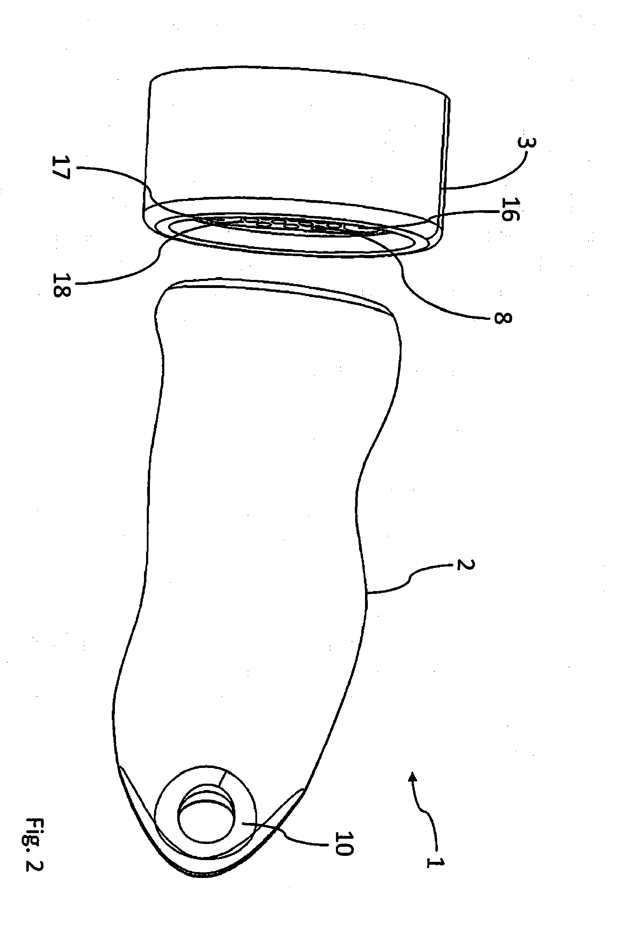

In Figuren 1 und 2 ist eine bestimmte Ausführungsform der erfindungsgemäßen magnetischen Verbindungsanordnung 1 dargestellt. Sie besteht aus einem Kupplungselement 2 und einem Gegenkupplungselement 3, welche in der in Figur 1 dargestellten Ansicht im zusammengekuppelten Zustand vorliegen. Die reversible Kupplung des Kupplungselements 2 und des Gegenkupplungselements 3 ist durch Magnetkraft hergestellt. Dazu hat das Kupplungselement 2 zwei das Kontaktfeld 5 flankierende und flächenbündig integrierte unterschiedlich gepolte Permanentmagnete 6, 7. Das Gegenkupplungselement 3 hat ebenfalls, an seiner als Kontaktfeld 18 ausgebildeten Stirnseite, zwei unterschiedlich gepolte Permanentmagnete 16, 17 flächenbündig integriert. Diese sind derart ausgerichtet, dass sie im gekoppelten Zustand den beiden Permanentmagneten 6, 7 am Kopplungselement 2 gegenüber liegen. Dabei weisen die jeweils zueinander ausgerichteten Permanentmagnete 6 und 16 bzw. 7 und 17 des Kupplungselements 2 und des Gegenkupplungselements 3 eine unterschiedliche magnetische Polung auf, wodurch das Kupplungselement 2 und das Gegenkupplungselement nur in einer möglichen Ausrichtung zusammengekuppelt sein kann, da bei nicht lagegerechter Zusammenführung eine magnetische Abstoßung erfolgt. Eine beispielhafte Belegung der magnetischen Polung wäre, dass der eine Permanentmagnet 6 an der Kontaktseite der beiden zueinander ausgerichteten Magnete dem magnetischen Nordpol zugeordnet ist, und der andere Permanentmagnet 7 des Kupplungselements 2 dem magnetischen Südpol, wobei der eine Permanentmagnet 16 an der Kontaktseite der beiden zueinander ausgerichteten Magnete dem magnetischen Südpol und der andere Permanentmagnet 17 des Gegenkupplungselements 3 dem magnetischen Nordpol zugeordnet ist. Eine äquivalente Variante wäre eine inverse magnetische Polung aller Permanentmagnete.

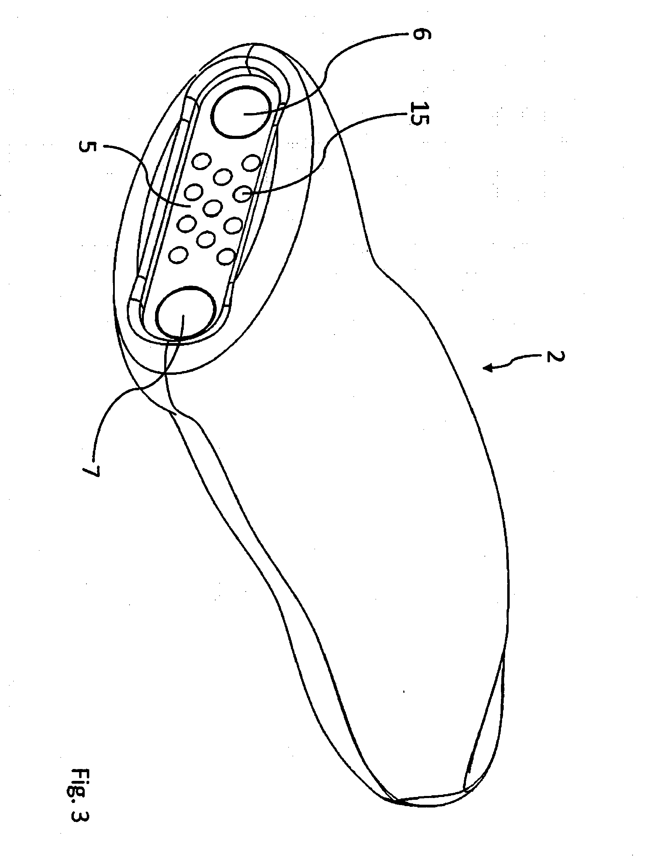

Durch die reversible, magnetische Kupplung des Kupplungselements 2 mit dem Gegenkupplungselement 3 wird es ermöglicht, dass das Kontaktfeld 5 des Kupplungselements 2 und das Kontaktfeld 18 des Gegenkupplungselements 3 einander kontaktieren. Wie in Figur 3 gezeigt umfasst das Kontaktfeld 5 mehrere Kontaktbereiche 15, welche im gekuppelten Zustand (siehe Figur 1) von den Kontaktelementen 8 des Kontaktfeldes 18 des Gegenkupplungselements kontaktierend beaufschlagt werden, wobei die Kontaktelemente 8 durch eine Feder 4 belastet sind. Durch die Vermeidung von abstehenden Teilen und Einbuchtungen wie Buchsen erhöht sich die Haltbarkeit, Lebensdauer und Robustheit der magnetischen Verbindungsanordnung 1. Abstehende Teile können bei unsachgemäßen Gebrauch leicht beschädigt werden, beispielsweise abbrechen. Einbuchtungen können beispielsweise durch Schmutzpartikel blockiert und/oder durch eindringende Feuchtigkeit beschädigt werden und sind zudem schwierig zu reinigen.

Die dargestellte Ausführungsform der magnetischen Verbindungsanordnung 1 umfasst zumindest ein als Flash-Speicher ausgebildetes Speichermedium, wobei die Leiterplatte 9 des Speichermediums in das Kupplungselement integriert ist. Über die Kontaktbereiche 15 und die Kontaktelemente 8 sind im gekuppelten Zustand eine Datenübertragung und eine Stromversorgung möglich. Das Gegenkupplungselement 3 kann insbesondere ein Verbindungsteil umfassen, um vorzugsweise in eine USB-Buchse beispielsweise an einem Endgerät wie einem Computer eingesteckt zu werden. Somit fungiert das Gegenkopplungselement 3 als Adaptereinheit für das Kupplungselement 2 (nicht dargestellt).

Jedes Kontaktelement 8 beaufschlagt einen ihm im gekuppelten Zustand gegenüber liegenden Kontaktbereich 15. Dabei ist jeweils zumindest ein Kontaktelement 8 und zumindest ein Kontaktbereich 15 der Versorgungsleitung 11, dem positiven Datenkanal 12, dem negativen Datenkanal 13 und der Masse 14 zugeordnet.

Um die Lebensdauer, Haltbarkeit und Strapazierfähigkeit der erfindungsgemäßen magnetischen Verbindungsanordnung 1 zu gewährleisten, ist diese mit einem stoßfesten und wasserfesten Material ummantelt. In der dargestellten Ausführungsform umfasst das Kupplungselement 2 zudem eine als Öse 10 ausgeformte Haltevorrichtung. Durch die Öse kann die magnetische Verbindungsanordnung 1, insbesondere das Kupplungselement 2 leicht befestigt werden.

Das Gegenkupplungselement kann vorzugsweise als Schutzkappe ausgeformt sein, wodurch insbesondere die Kontaktfelder 5 und 18 vor Gewalteinwirkung und Umwelteinflüssen geschützt werden.

## Patentansprüche

1. Magnetische Verbindungsanordnung aus einem Kupplungselement und einem Gegenkupplungselement, wobei das Kupplungselement und das Gegenkupplungselement durch Magnetkraft reversibel verbunden sind, wobei das Kupplungselement und das Gegenkupplungselement ein jeweils mehrere Kontaktbereiche umfassendes Kontaktfeld aufweisen und sich das Kupplungselement und das Gegenkupplungselement über Kontaktbereiche der Kontaktfelder kontaktieren, **dadurch gekennzeichnet, dass** die Verbindungsanordnung zum Verbinden von zumindest einer Datenleitung und zumindest einer Elektrizitätsleitung dient, und dass die Ausrichtung des Kupplungselements und des Gegenkupplungselements zueinander durch magnetische Polung festgelegt ist.

2. Magnetische Verbindungsanordnung gemäß Anspruch 1, **dadurch gekennzeichnet, dass** die magnetische Verbindungsanordnung, vorzugsweise das Kupplungselement zumindest ein Speichermedium umfasst.

3. Magnetische Verbindungsanordnung gemäß Anspruch 2, **dadurch gekennzeichnet, dass** die magnetische Verbindungsanordnung, vorzugsweise das Kupplungselement zumindest einen Flash-Speicher umfasst.

4. Magnetische Verbindungsanordnung gemäß einem der Ansprüche 1 bis 3, **dadurch gekennzeichnet, dass** das Gegenkupplungselement zumindest ein Verbindungteil umfasst, welches vorzugsweise in eine USB-Buchse einsteckbar ist, so dass zumindest eine Strom- und/oder Datenverbindung insbesondere mit einem kompatiblen Gerät herstellbar ist.

5. Magnetische Verbindungsanordnung gemäß einem der Ansprüche 1 bis 4, **dadurch gekennzeichnet, dass** das Kupplungselement zumindest zwei unterschiedlich gepolte Permanentmagnete umfasst und dass das Gegenkupplungselement zumindest zwei unterschiedlich gepolte Permanentmagnete umfasst, wobei das Kupplungselement und das Gegenkupplungselement durch die Magnetkraft der unterschiedlich gepolten Permanentmagnete zusammen gehalten werden und dadurch die Polung der zumindest einen Datenleitung und der zumindest einen Elektrizitätsleitung festgelegt wird, wobei eine nicht lagegerechte Verbindung von Kupplungselement und Gegenkupplungselement durch die magnetische Abstoßungskraft gleichgepolter Magnete verhindert wird.

6. Magnetische Verbindungsanordnung gemäß einem der Ansprüche 1 bis 5, **dadurch gekennzeichnet, dass** es sich bei den jeweils zumindest zwei verwendeten Permanentmagneten am Kupplungselement und am Gegenkupplungselements um Neodym-Magnete handelt.

7. Magnetische Verbindungsanordnung gemäß einem der Ansprüche 1 bis 6, **dadurch gekennzeichnet, dass** die zumindest eine Datenleitung aus zumindest einem Datenleitungspaar besteht, wobei zumindest ein Datenleitungspaar dem positiven Datenkanal und zumindest ein Datenleitungspaar dem negativen Datenkanal zugeordnet ist.

8. Magnetische Verbindungsanordnung gemäß einem der Ansprüche 1 bis 7, **dadurch gekennzeichnet, dass** die zumindest eine Elektrizitätsleitung aus zumindest einer Leitung, die der Masse zugeordnet ist und zumindest einer Versorgungsleitung, an welche eine Versorgungsspannung, vorzugsweise eine Versorgungsspannung von 5V, angelegt ist, besteht.

9. Magnetische Verbindungsanordnung gemäß einem der Ansprüche 1 bis 8, **dadurch gekennzeichnet, dass** das Kontaktfeld des Gegenkupplungselements zumindest vier insbesondere federbelastete Kontaktelemente, vorzugsweise elf insbesondere federbelastete Kontaktelemente, umfasst, wobei zumindest jeweils ein Kontaktelement dem positiven Datenkanal, dem negativen Datenkanal, der Versorgungsleitung und der Masse zugeordnet ist, und dass diese Kontaktelemente jeweils zumindest einen äquivalent zugeordneten Kontaktbereich des Kontaktfeldes am Kupplungselement kontaktierend beaufschlagen, wodurch eine Datenund/oder Elektrizitätsverbindung hergestellt ist.

10. Magnetische Verbindungsanordnung gemäß einem der Ansprüche 1 bis 9, **dadurch gekennzeichnet, dass** das Kupplungselement eine Haltevorrichtung, vorzugsweise eine Öse, umfasst.

11. Magnetische Verbindungsanordnung gemäß einem der Ansprüche 1 bis 10, **dadurch gekennzeichnet, dass** das Gegenkupplungselement als Schutzkappe für das Kupplungselement ausgeformt ist.

12. Magnetische Verbindungsanordnung gemäß einem der Ansprüche 1 bis 11, **dadurch gekennzeichnet, dass** die magnetische Verbindungsanordnung derart ummantelt ist, dass sie rutschfest, stoßfest und/oder wasserdicht ist.

13. Verwendung der magnetischen Verbindungsanordnung aus einem der Ansprüche 1 bis 12 im Außenbereich, wobei die Funktionalität der magnetischen Verbindungsanordnung nicht durch grobe Gewalteinwirkung und/oder Schmutz und/oder Feuchtigkeit beeinträchtigt wird.

14. Verwendung der magnetischen Verbindungsanordnung aus einem der Ansprüche 1 bis 12 im Sicherheitsbereich, wobei die Funktionalität der magnetischen Verbindungsanordnung nicht durch grobe Gewalteinwirkung und/oder Schmutz und/oder Feuchtigkeit beeinträchtigt wird.
